(19) Europäisches Patentamt
European Patent Office
Office européen des brevets

(11) **EP 4 714 710 A1**

(12) **EUROPEAN PATENT APPLICATION**
published in accordance with Art. 153(4) EPC

(43) Date of publication:
**25.03.2026 Bulletin 2026/13**

(21) Application number: **23941228.1**

(22) Date of filing: **12.09.2023**

(51) International Patent Classification (IPC):
**B60K 35/00** (2024.01)      **B60W 40/04** (2006.01)

(52) Cooperative Patent Classification (CPC):
Y02T 10/40

(86) International application number:
**PCT/CN2023/118296**

(87) International publication number:
**WO 2024/255003 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2023   CN 202310707740**

(71) Applicant: **Dongfeng Motor Group Co., Ltd
Hubei 430056 (CN)**

(72) Inventors:
• **DING, Chen**
  **Wuhan, Hubei 430056 (CN)**
• **YU, Chen**
  **Wuhan, Hubei 430056 (CN)**
• **LIU, Yijun**
  **Wuhan, Hubei 430056 (CN)**

(74) Representative: **Valet Patent Services Limited
c/o Caya 83713X
Am Börstig 5
96052 Bamberg (DE)**

(54) **FRONT VEHICLE DISPLAY METHOD AND APPARATUS FOR INTELLIGENT DRIVING ASSISTANCE SYSTEM, AND COMPUTER SYSTEM**

(57)    A preceding vehicle display method for an intelligent driving assistance system, using the intelligent driving assistance system, comprising the following steps: extraction of parameters: based on a real-time information and combined with an algorithm, a lateral vector distance and a longitudinal vector distance of a preceding vehicle relative to an ego vehicle are output, and a parameter information of left lane line and right lane line of a driving lane of the ego vehicle is simultaneously output; determination of a display position on a screen: a lateral position of the preceding vehicle, a relative position relationship between the preceding vehicle and the lane lines, and longitudinal position relationships among various preceding vehicles are calculated, to respectively obtain a display of lateral position and a display of longitudinal position of the preceding vehicle on the screen, and then parameter signals on the display of lateral position and the display of longitudinal position are transmitted to the screen. A preceding vehicle display device for an intelligent driving assistance system and a computer system are also disclosed. Processed preceding vehicle position information is completely output to an end of a display of screen for display by the display of screen, to be capable of enhancing a visual experience of a customer. The invention can be widely applied in the field of intelligent driving.

EP 4 714 710 A1

during a driving of an ego vehicle, a vehicle sensor collects in real time information such as a position, a speed, a heading direction, and lane lines of a preceding vehicle, and transmits the information to a perception fusion module of ADAS

the perception fusion module, based on these information and combined with an algorithm, outputs a lateral vector distance (Py) and a longitudinal vector distance (Px) of the preceding vehicle relative to the ego vehicle, and simultaneously outputs a parameter information of left and right lane lines of a driving lane of the ego vehicle

a coordinate system used by an ADAS visualization module takes a ground corresponding to an intersection of a central axis of vehicle and a horizontal line of camera as an origin of a vehicle coordinate system, a forward direction as X with forward representing positive, and a lateral direction as Y with toward left representing positive

based on the information provided by the perception fusion module, the ADAS visualization module performs an optimization processing respectively from aspects of a lateral position of the preceding vehicle, a relative position relationship of the preceding vehicle with the lane lines and a longitudinal position of the preceding vehicle, to respectively obtain a display of lateral position and a display of longitudinal position of the preceding vehicle in a screen

outputting parameter signals of the display of lateral position and the display of longitudinal position to the display of screen for display. Optionally, the ADAS visualization module assumes that all lanes, which are in the same direction as the ego vehicle's traveling lane, have the same lane widths, and the lane widths of lanes in which the ego vehicle travels are all W

FIG. 3

**Description**

TECHNICAL FIELD

The invention relates to the intelligent driving technology, and in particular to a preceding vehicle display method, device and computer system for an intelligent driving assistance system.

BACKGROUND

With the advancement of intelligence and electrification of automobile, intelligent driving functions such as Advanced Driver Assistance System/Autonomous Driving (ADAS/AD) have gradually become key research and development and technical investment areas for mainstream manufacturers. While ADAS functions bring driving safety and comfort to customers, a human-machine interaction module (HMI) of an automobile cockpit also brings an upgraded technological experience to customers. An instrumental display of automobile is an important component of a HMI module of the automobile cockpit. Instruments of traditional vehicle models often only display conventional vehicle status information such as vehicle speed and rotational speed, whereas vehicles equipped with ADAS functions further tend to map actual road conditions onto the instruments, to show more ADAS-related functional indicative information to customers. As vehicles are important components in driving road conditions, a representation of the vehicles on the instruments is an important part of HMI. However, currently, some models of vehicles on the market exhibit inaccurate positions or disproportionated sizes of preceding vehicles displayed on the instruments, resulting in poor user experiences.

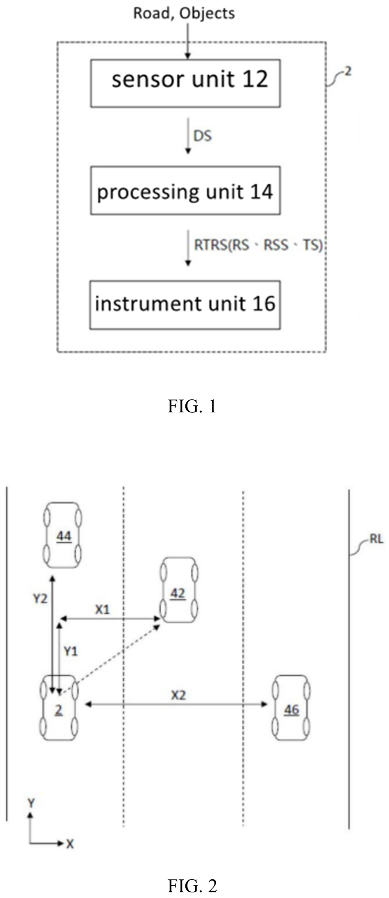

In view of this, some manufacturers have proposed the following solutions: referring to FIG. 1 to FIG. 2, road users, road surface information, and road sign information obtained are transmitted to an instrument unit 16 by a processing unit 14 through a sensor unit 12 for real-time display.

However, in the entire solution, the processing unit 14 only serves to transmit actual road conditions as truly and accurately as possible to the instrument for display, without an independent display module and without taking into account functional requirements of the instrumental display (such as comfort).

SUMMARY

An object of the invention is to overcome deficiencies of the above background art, and to provide a preceding vehicle display method, device and computer system for an intelligent driving assistance system, so that the following technical problems can be solved:

1. a problem of inaccurate lateral display of vehicles or even display in wrong lanes can be solved;
2. problems of vehicle overlap and overly small vehicle models or limited display of the number of preceding vehicles can be solved;
3. through this method, a computational power problem of an instrument itself can be reduced;
4. through intuitive data, causes of problems of instrumental display can be quickly found;
5. this patent can effectively enhance a human-machine interaction experience of lower-cost vehicle models limited by hardware such as sensors and instruments.

A preceding vehicle display method for an intelligent driving assistance system provided by the invention, using the intelligent driving assistance system, comprising the following steps: extraction of parameters: outputting, during a driving of an ego vehicle, based on an information collected in real time by a vehicle sensor and combined with an algorithm, a lateral vector distance and a longitudinal vector distance of a preceding vehicle relative to the ego vehicle, and simultaneously outputting a parameter information of left lane line and right lane line of a driving lane of the ego vehicle, the information collected in real time by the vehicle sensor comprising a position, a speed, a heading direction, and a lane line information of the preceding vehicle; determination of a display position on a screen: calculating, based on the parameter information, respectively a lateral position of the preceding vehicle, relative position relationships between the preceding vehicle and lane lines, and longitudinal position relationships among various preceding vehicles, to respectively obtain a display of lateral position and a display of longitudinal position of the preceding vehicle on the screen, and then transmitting parameter signals on the display of lateral position and the display of longitudinal position to the screen for displaying by the screen, wherein lane widths of same-direction lanes in which the ego vehicle travels are the same by default.

In the above technical solution, a specific process of a step of the determination of the display position on the screen is as follows: display of a lateral position of the preceding vehicle: calculating a lane to which the preceding vehicle belongs, calculating a ratio of a lateral distance parameter of the preceding vehicle to a lane width at which the ego vehicle is located , and transmitting the lane to which the preceding vehicle belongs and the ratio to the screen, to display a lateral position of the preceding vehicle; display of a longitudinal position of the preceding vehicle: adopting a method of segmented display for longitudinal position of vehicle, to divide a longitudinal position of the screen into two areas which are a first area displaying nearby vehicles and a second area displaying distant vehicles, wherein sizes of vehicle models displayed in the areas are linearly set according to a distance from the ego vehicle.

In the above technical solution, a specific process of a step of the display of the lateral position of the preceding vehicle is as follows: lane determination: combining first, according to the parameter information, a lateral vector distance between the ego vehicle and the preceding vehicle with a lane line algorithm to determine a lane to which the preceding vehicle belongs; calculation of a position proportion of left lane line and right lane line: calculating, after the lane to which the preceding vehicle belongs is determined, a vector distance from the preceding vehicle in each lane to a left lane line or a right lane line of a lane of the ego vehicle, and then obtaining a percentage of the vector distance occupying a lane width at which the ego vehicle is located ; a display of a lateral position on a screen: transmitting a calculated signal of the percentage of the vector distance, from each preceding vehicle to the left lane line or the right lane line of the lane at which the ego vehicle is located, occupying the lane width of the lane at which the ego vehicle is located and a signal of the lane to which the preceding vehicle belongs, to the screen, for a display of screen module to display a lateral position of the preceding vehicle.

In the above technical solution, in the step of lane determination, a specific process of lane determination to which the preceding vehicle belongs is as follows: calculation of distances from the ego vehicle to the left lane line and right lane line: respectively calculating, by substituting a longitudinal vector distance Px of the preceding vehicle into a lane line function of the left lane line and right lane line of the ego vehicle, a value of the lateral vector distance $Y_L$ from the ego vehicle to the left lane line of the ego vehicle and a value of the lateral vector distance $Y_R$ from the ego vehicle to the right lane line of the ego vehicle, wherein the lane line function is $Y = C0 + C1 * x + C2 * x^2 + C3 * x^3$; lane judgement: comparing a lateral vector distance Py between the ego vehicle and the preceding vehicle, with $Y_L$ and $Y_R$ respectively, to judge a situation in which the preceding vehicle is located in a left, middle, or right lane: 1) when $Py > Y_L$, the preceding vehicle is located in the left lane; 2) when $Y_L \geq Py \geq Y_R$, the preceding vehicle is located in the middle lane where the ego vehicle is located; 3) when $Y_R > Py$, the preceding vehicle is located in the right lane; in all the above three situations, the ego vehicle travels in the middle lane by default.

In the above technical solution, in the step of the calculation of the position proportion of left lane line and right lane line, a calculation process of a vector distance $D_L$ from the preceding vehicle in each lane to the left lane line or the right lane line of the lane of the ego vehicle is as follows: 1) when the preceding vehicle is located in the left lane, $D_L=Py-Y_L$; 2) when the preceding vehicle is located in the middle lane where the ego vehicle is located, $D_L=Y_L-Py$; 3) when the preceding vehicle is located in the right lane, $D_L=Y_R-Py$.

In the above technical solution, in the step of the calculation of the position proportion of left lane line and right lane line, a calculation process of a percentage $D_L\_Pct$ of the vector distance $D_L$ from the preceding vehicle to the left lane line or the right lane line of the lane of the ego vehicle occupying the lane width at which the ego vehicle is located W is as follows: 1) the lane width at which the ego vehicle is located $W=Y_L-Y_R$ 2) when the preceding vehicle is located in the left lane, $D_L\_Pct=(Py-Y_L)/(Y_L-Y_R)$; 3) when the preceding vehicle is located in the middle lane where the ego vehicle is located, $D_L\_Pct = (Y_L-Py) / (Y_L-Y_R)$; 4) when the preceding vehicle is located in the right lane, $D_L\_Pct = (Y_R-Py) / (Y_L-Y_R)$.

In the above technical solution, a specific process of a step of the display of the longitudinal position of the preceding vehicle is as follows: an area partitioning: dividing a longitudinal display area of instrument into two portions which are the first area occupying X% of the longitudinal display area and the second area occupying 1-X% of the longitudinal display area; positional relationships of various areas: displaying, in the first area, an end position of displayed nearby vehicle Lgt_Lim, and displaying, in the second area, vehicles between the end position of the displayed nearby vehicle Lgt_Lim and a farthest position of displayed distant vehicle Lgt_Max; a preceding vehicle static model in the first area: displaying, in the first area, a model of only one preceding vehicle on each lane of the instrument, the only one preceding vehicle being a preceding vehicle closest to the ego vehicle in each lane, and having a model size Size_min =(1-X%)*L, where L is a longitudinal size of display area of the instrument; a longitudinal position of the preceding vehicle being always maintained at an X% position of the instrument; a preceding vehicle dynamic model in the first area: adjusting, when a preceding vehicle runs in the first area, a model size and a longitudinal position of the preceding vehicle according to a longitudinal position Px by a linear proportion Px_Pct, where a calculation logic of Px_Pct is as follows: Px_Pct = (Px * X%) / Lgt_Lim; positional arrangements of various preceding vehicles: displaying, on the screen, the preceding vehicle at a longitudinal display position being a Px_Pct from bottom to top of a display area of a display of screen, a model size of the preceding vehicle being: Size_zone1 = - (Size_base - Size_min)/X% * $P_X\_Pct$ + Size_base, where, Size_base is a size of a base model, which is a model size of the preceding vehicle at Px = 0.

In the above technical solution, in a step of the extraction of parameters, a coordinate system used by an ADAS visualization module takes a ground corresponding to an intersection of a central axis of vehicle and a horizontal line of camera as an origin of a vehicle coordinate system, a forward direction as X with forward representing positive, and a lateral direction as Y with toward left representing positive, a lateral direction as Y, and left as positive; wherein, collected position informations and lane line parameters are as follows: Py: a vector distance in a Y direction between a center of rear axle of the ego vehicle and a center of rear axle of the preceding vehicle; Px: a vector distance in an X direction from a center of front bumper of the ego vehicle to a center of rear bumper of the preceding vehicle; C0_L0: a lateral vector distance from a left lane line to the center of rear axle of the ego vehicle; C0_R0: a lateral vector distance from a right lane line to the center of rear axle of the ego vehicle; C1_L0: an angle between a tangent at a turn of the left lane line and a straight line of straight segment of the left lane line; C1_R0: an angle between a tangent at a turn of the right lane line and a straight line of straight segment of the right lane line; C2_L0: a curvature at a turn of the left lane line; C2_R0: a curvature at a turn of the right lane line; C3_L0: a change rate of curvature at a turn of the left lane line; C3_R0: a change rate of curvature at a turn of the right lane line.

The invention further provides a preceding vehicle display device for an intelligent driving assistance system, comprising an intelligent driving assistance system, the intelligent driving assistance system comprising the following portions: a perception fusion module: during a driving of an ego vehicle, based on an information collected in real time by a vehicle sensor and combined with an algorithm, outputting a lateral vector distance and a longitudinal vector distance of a preceding vehicle relative to the ego vehicle, and simultaneously outputting a parameter information of left lane line and right lane line of a driving lane of the ego vehicle; the information collected in real time by the vehicle sensor comprising a position, a speed, a heading direction, and a lane line information of the preceding vehicle; an ADAS visualization module: calculating, based on the parameter information, respectively a lateral position of the preceding vehicle, relative position relationships of the preceding vehicle with lane lines, and longitudinal position relationships among various preceding vehicles, to respectively obtain a display of a lateral position and a display of a longitudinal position of the preceding vehicle in a screen, and then transmitting parameter signals of the display of lateral position and the display of longitudinal position to the screen for display by the screen; wherein lane widths of same-direction lanes in which the ego vehicle travels are the same by default.

The invention also provides a computer system which comprises the preceding vehicle display device for the intelligent driving assistance system.

The preceding vehicle display method, device and computer system for an intelligent driving assistance system of the invention have the following advantageous effects:

1. In this solution, by introducing a method of lane line functions, through comparing lateral positions of the preceding vehicle and lane lines, parameter informations of a lane of the preceding vehicle and a lateral position of the preceding vehicle in the lane can be provided to a display of screen, thereby solving the problem of inaccurate lateral display of vehicles or even display in wrong lanes.

2. In this solution, by adopting a method of segmented display for longitudinal position of vehicle, problems of vehicle overlap and overly small vehicle models or limited display of the number of preceding vehicles can be optimized, so as to restore actual real road conditions as much as possible and provide a better visual experience for customers.

3. Since an ADAS visualization system is independent to a system of a display of screen of an automobile , through this method, a computational load problem of a display of screen itself can be reduced.

BRIEF DESCRIPTION OF DRAWINGS

FIG. 1 is a hardware logic block diagram showing a related manufacturer's solution in the related art;

FIG. 2 is a schematic diagram showing an actual road condition aimed by the related manufacturer's solution in the related art;

FIG. 3 is a schematic overall flow chart of a preceding vehicle display method for an intelligent driving assistance system of the invention;

FIG. 4 is a flow chart of a display of a lateral position of the preceding vehicle in a step of determining a display position on a screen of the preceding vehicle display method for the intelligent driving assistance system of the invention;

FIG. 5 is a schematic diagram of an actual road condition of a step of lane determination in the preceding vehicle display method for the intelligent driving assistance system of the invention, the step of lane determination belonging to the step of the display of the lateral position of the preceding vehicle, the step of the display of the lateral position of the preceding vehicle belonging to the step of determining the display position on the screen;

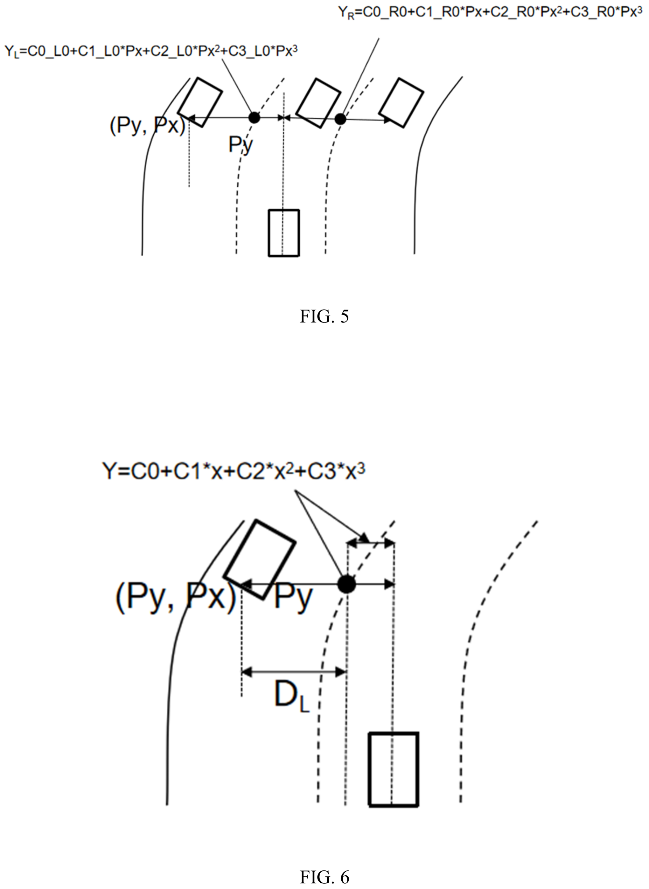

FIG. 6 is a schematic diagram showing an example of an actual road condition of a vector distance $D_L$ from the preceding vehicle in each lane to a left lane line or a right lane line of a lane of the ego vehicle in a step of calculation of a position proportion of left lane line and right lane line, the step of calculation of a position proportion of left lane line and right lane line belonging to the step of the display of the lateral position of the preceding vehicle, the step of the display of the lateral position of the preceding vehicle belonging to the step of determining the display position on the screen in the preceding vehicle display method for the intelligent driving assistance system of the invention (the preceding vehicle being located in the left lane of the ego vehicle is taken as an example);

FIG. 7 is a flow chart showing a display of a longitudinal position of the preceding vehicle of a step of determining a display position on a screen in the preceding vehicle display method for the intelligent driving assistance system of the invention;

FIG. 8 is a schematic diagram showing an actual display of a screen of the display of the longitudinal position of the preceding vehicle in the step of determining the display position on the screen in the preceding vehicle display method for the intelligent driving assistance system of the invention;

FIG. 9 is a schematic diagram showing a relationship of a size of a model of preceding vehicle with a longitudinal proportion of the model of preceding vehicle on an instrument reflecting a specific technical effect in a step of the display of the longitudinal position of the preceding vehicle belonging to the step of determining the display position on the screen in the preceding vehicle display method for the intelligent driving assistance system of the invention;

FIG. 10 is a schematic structural diagram of a preceding vehicle display device for an intelligent driving assistance system of the invention;

FIG. 11 is a schematic structural diagram of a computer system of the invention.

DETAILED DESCRIPTION

The following describes the invention in further detail with reference to the drawings and embodiments, but this embodiment should not be construed as limiting the invention.

Technical contents disclosed in FIG. 1 and FIG. 2 have been described in detail in the background art, and will not be repeated here.

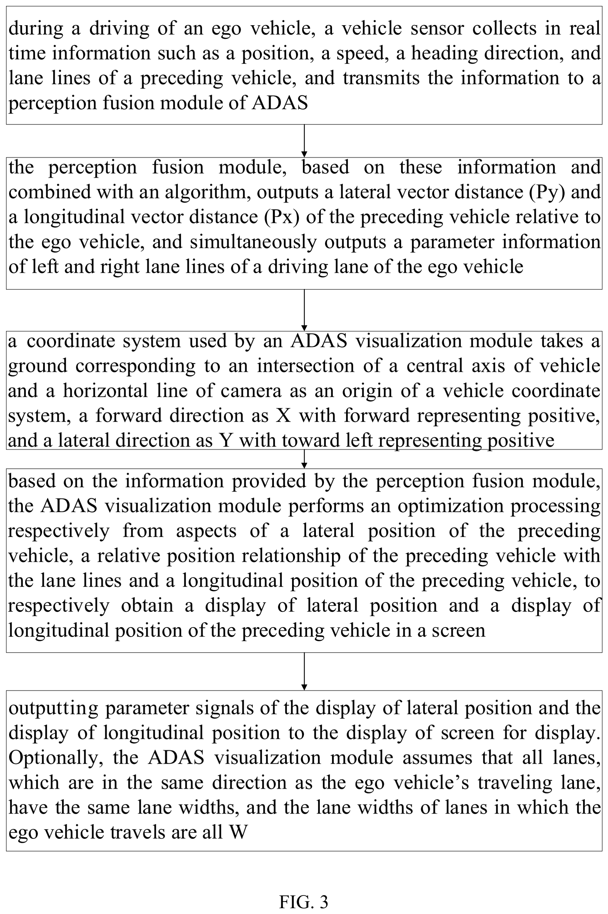

As shown in FIG. 3, a preceding vehicle display method for an intelligent driving assistance system of the invention comprises the following steps:

signal acquisition: during a driving of an ego vehicle, a vehicle sensor collects in real time information such as a position, a speed, a heading direction, and lane lines of a preceding vehicle, and transmits the information to a perception fusion module of ADAS;

extraction of parameters: the perception fusion module, based on these information and combined with an algorithm, outputs a lateral vector distance ($P_y$) and a longitudinal vector distance ($P_x$) of the preceding vehicle relative to the ego vehicle, and simultaneously outputs a parameter information of left and right lane lines of a driving lane of the ego vehicle. A coordinate system used by an ADAS visualization module takes a ground corresponding to an intersection of a central axis of vehicle and a horizontal line of camera as an origin of a vehicle coordinate system, a forward direction as X with forward representing positive, and a lateral direction as Y with toward left representing positive. a position information and lane line parameters are described as follows:

$P_y$: a vector distance in a Y direction between a center of rear axle of the ego vehicle and a center of rear axle of the preceding vehicle

$P_x$: a vector distance in an X direction from a center of front bumper of the ego vehicle to a center of rear bumper of the preceding vehicle

C0_L0: a lateral vector distance from a left lane line to the center of rear axle of the ego vehicle

C0_R0: a lateral vector distance from a right lane line to the center of rear axle of the ego vehicle

C1_L0: an angle between a tangent at a turn of the left lane line and a straight line of straight segment of the left lane line

C1_R0: an angle between a tangent at a turn of the right lane line and a straight line of straight segment of the right lane line

C2_L0: a curvature at a turn of the left lane line

C2_R0: a curvature at a turn of the right lane line

C3_L0: a change rate of curvature at a turn of the left lane line

C3_R0: a change rate of curvature at a turn of the right lane line

Determination of a display position on a screen: based on the information provided by the perception fusion module, the ADAS visualization module performs an optimization processing respectively from aspects of a lateral position of the preceding vehicle, a relative position relationship of the preceding vehicle with the lane lines and a longitudinal position of the preceding vehicle, to respectively obtain a display of lateral position and a display of longitudinal position of the preceding vehicle in a screen, and then outputs parameter signals of the display of lateral position and the display of longitudinal position to the display of screen for display. Optionally, the ADAS visualization module assumes that all lanes, which are in the same direction as the ego vehicle's traveling lane, have the same lane widths, and the lane widths of lanes in which the ego vehicle travels are all W.

Optionally, as the most important step in the invention, a specific process of a step of determining a display position on a screen is as follows:

1. a display of lateral position of the preceding vehicle

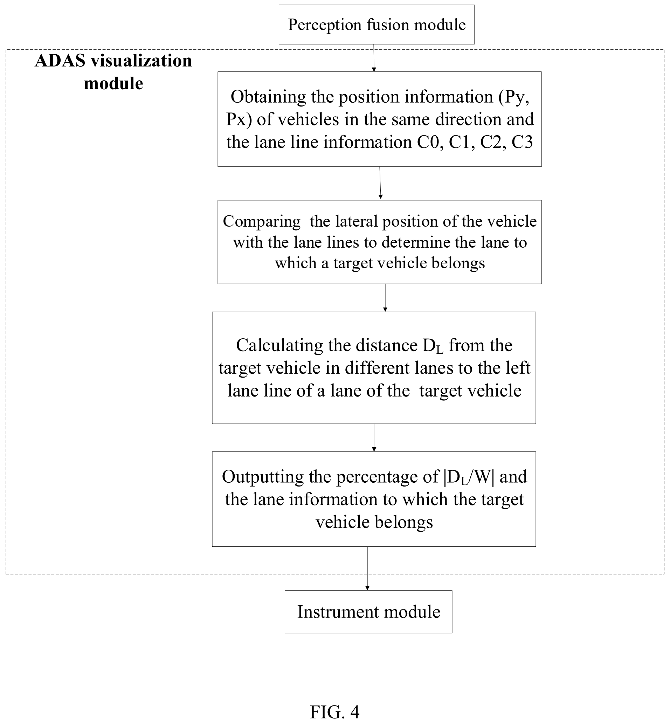

as shown in FIG. 4, lane determination: according to the information output by the perception fusion, the ADAS visualization module first combines a lateral vector distance of the ego vehicle and the preceding vehicle with a lane line algorithm for comparison, to determine a lane to which the preceding vehicle belongs;

as shown in FIG. 5, in this embodiment, a method for determination is specifically as follows:

calculation of distances from the ego vehicle to the left lane line and right lane line: by substituting a longitudinal position Px of the preceding vehicle into lane line functions of the left lane line and right lane line of the ego vehicle, where a formula of the lane line function is $Y = C0 + C1 * x + C2 * x^2 + C3 * x^3$, a value of the lateral vector distance YL from the ego vehicle to the left lane line of the ego vehicle and a value of the lateral vector distance YR from the ego vehicle to the right lane line of the ego vehicle are respectively obtained;

lane judgement: a lateral vector distance Py between the ego vehicle and the preceding vehicle is compared with $Y_L$ and $Y_R$ according to Table 1 below, to judge a situation in which the preceding vehicle is located in a left, middle, or right lane (in all the above situations, the ego vehicle travels in the middle lane by default):

Table 1

| Classification | Numerical Comparison | Lane Belonged To | $D_L$ | Lane Width at which the ego vehicle is located W | $D_L$_Pct |
|---|---|---|---|---|---|
| 1 | $Py > Y_L$ | Left Lane | $P_y - Y_L$ | $Y_L - Y_R$ | $(P_y - Y_L)/(Y_L - Y_R)$ |
| 2 | $Y_L \geq Py \geq Y_R$ | Host Lane | $Y_L - P_y$ | $Y_L - Y_R$ | $(Y_L - Py)/(Y_L - Y_R)$ |
| 3 | $Y_R > Py$ | Right Lane | $Y_R - P_y$ | $Y_L - Y_R$ | $(Y_R - Py)/(Y_L - Y_R)$ |

calculation of a position proportion of left lane line and right lane line: after a lane to which the preceding vehicle belongs is determined, as shown in FIG. 6, a vector distance DL from the preceding vehicle in different lanes to a left lane line or a right lane line of a lane of the ego vehicle can be calculated (the preceding vehicle being in a left lane of the ego vehicle is taken as an example in an embodiment in FIG. 6), and then a percentage DL_Pct of DL occupying the lane width at which the ego vehicle is located W is obtained according to FIG. 5. A specific calculation process is detailed in Table 1.

a display of a lateral position on a screen: finally, the ADAS visualization module transmits a signal of calculated lane percentages DL_Pct of the vector distances DL from various preceding vehicles to the left lane lines or the right lane lines of the lane of the ego vehicle occupying the lane widths at which the ego vehicle is located W , and a signal of the lanes to which the preceding vehicles belong, to a module for display of screen, for the module for display of screen to display a lateral position of the preceding vehicle.

2. a display of a longitudinal position of the preceding vehicle

Currently, there are two common practices for longitudinal display of preceding vehicles on the market:

preceding vehicles are displayed according to an actual displayable distance, which can restore real-time road conditions to the greatest extent. however, due to errors of sensor, problems such as inaccurate display or jitter of distant vehicles may occur, and at the same time, due to a limited longitudinal size of the instrument, a problem of small vehicle models displayed on the instrument may also be brought.

Only closer preceding vehicles are displayed (e.g., within 50 meters), which can optimize visual experience and avoid problems of jitter or inaccurate display of distant vehicles, but a problem that ADAS functions act but corresponding vehicles are not displayed on the instrument may occur, causing the discomfort of customer.

Since the aforementioned two methods have great deficiencies in displaying preceding vehicles in longitudinal arrangement, aiming at a problem of a display of longitudinal position of vehicles, the invention proposes a method of segmented display for longitudinal position of vehicle, to provide customers with a better visual experience while restoring actual road conditions as much as possible.

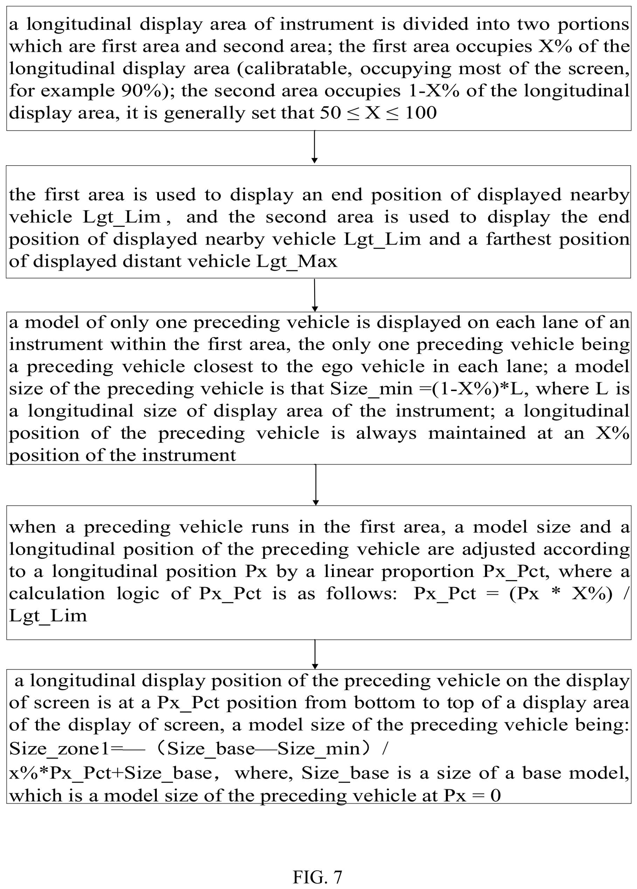

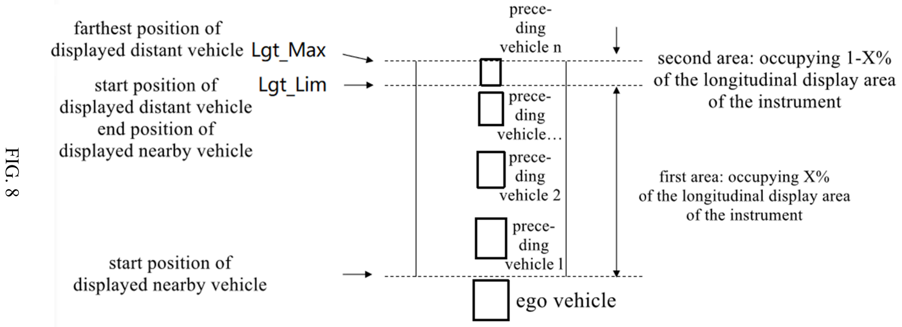

As shown in FIG. 7 to FIG. 8, in the preceding vehicle display method for the intelligent driving assistance system of the invention, a specific process of a step of the display of the longitudinal position of the preceding vehicle is as follows:

area partitioning: a longitudinal display area of instrument is divided into two portions which are first area and second area; the first area occupies X% of the longitudinal display area (calibratable, occupying most of the screen, for example 90%); the second area occupies 1-X% of the longitudinal display area, it is generally set that $50 \leq X \leq 100$; position relationships of various areas: the first area is used to display an end position of displayed nearby vehicle Lgt_Lim (calibrated according to display effect), and the second area is used to display vehicles between the end position of displayed nearby vehicle Lgt_Lim and a farthest position of displayed distant vehicle Lgt_Max (calibratable);

a preceding vehicle static model in first area: a model of only one preceding vehicle is displayed on each lane of an instrument within the first area, the only one preceding vehicle being a preceding vehicle closest to the ego vehicle in each lane; a model size of the preceding vehicle is that Size_min =(1-X%)*L, where L is a longitudinal size of display area of the instrument; a longitudinal position of the preceding vehicle is always maintained at an X% position of the instrument;

a preceding vehicle dynamic model in the first area: when a preceding vehicle runs in the first area, a model size and a longitudinal position of the preceding vehicle are adjusted according to a longitudinal position Px by a linear proportion Px_Pct, where a calculation logic of Px_Pct is as follows:

$$Px\_Pct = (Px * X\%) / Lgt\_Lim;$$

positional arrangements of various preceding vehicles: a longitudinal display position of the preceding vehicle on the display of screen is at a Px_Pct position from bottom to top of a display area of the display of screen, a model size of the preceding vehicle being:

$$Size\_zone1 = -(Size\_base - Size\_min)/X\% * P_X\_Pct + Size\_base,$$

where, Size_base is a size of a base model, which is a model size of the preceding vehicle at Px = 0.

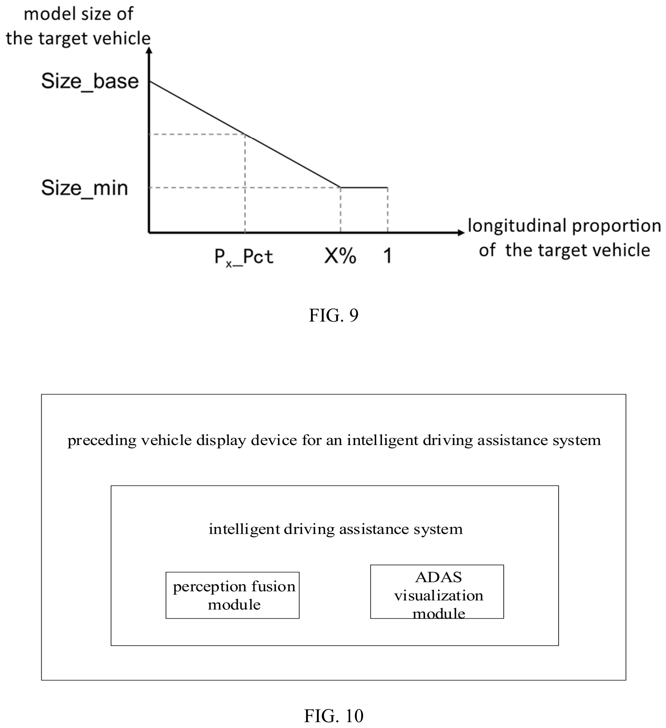

Specific effects are as shown in FIG. 9, which shows a relationship between a model size of the preceding vehicle and a longitudinal proportion of a model of the preceding vehicle on the instrument.

The above is a complete flow of the preceding vehicle display method for the intelligent driving assistance system of the invention.

As shown in FIG. 10, a preceding vehicle display device for the intelligent driving assistance system of the invention comprises an intelligent driving assistance system, the intelligent driving assistance system comprising the following portions:

a perception fusion module: during a driving of an ego vehicle, based on an information collected in real time by a vehicle sensor and combined with an algorithm, a lateral vector distance and a longitudinal vector distance of a preceding vehicle relative to the ego vehicle are output, and a parameter information of left lane line and right lane line of a driving lane of the ego vehicle is simultaneously output; the information collected in real time by the vehicle sensor comprises a position, a speed, a heading direction, and a lane line information of the preceding vehicle;

an ADAS visualization module: calculating, based on the parameter information, respectively a lateral position of the preceding vehicle, relative position relationships of the preceding vehicle with lane lines, and longitudinal position relationships among various preceding vehicles, to respectively obtain a display of a lateral position and a display of a longitudinal position of the preceding vehicle in a screen, and then transmitting parameter signals of the display of lateral position and the display of longitudinal position to the screen for display by the screen; wherein lane widths of same-direction lanes in which the ego vehicle travels are the same by default.

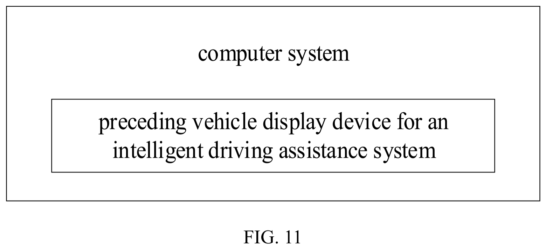

As shown in FIG. 11, a computer system of the invention comprises the preceding vehicle display device for the intelligent driving assistance system.

Of course, as a preferred embodiment of the invention, to enhance a human-machine interaction experience of the instrument, an accuracy of sensor can be improved and a lidar can be introduced, while a computing capability for a display of screen can be upgraded and a display area of the display of screen can be increased, better display effects can be provided when an information of real-time road condition is displayed.

Technical key points and technical principles of the invention are as follows.

1. For lateral display of preceding vehicles, an equation for lane line is introduced as a reference benchmark; a percentage of a preceding vehicle occupying a lane of the ego vehicle is obtained by calculating a relative position of the preceding vehicle with the lane lines, so that the display of screen laterally displays the lanes in a manner of percentages of various lanes, rather than a lateral distance of the preceding vehicle relative to the ego vehicle is directly used for displaying as commonly done.

2. For longitudinal display of preceding vehicles, a method of segmented display is adopted, and a calculation method of a minimum vehicle model under this method of segmented display is defined. in first area, a relationship of a longitudinal distance of the preceding vehicle Px with a longitudinal percentage displayed on the display of screen and a size of vehicle model is defined.

Definitions of Abbreviations and Key Terms

ADAS : Advanced Driver Assistance Systems
AD : Autonomous Driving
HMI : Human Machine Interaction

ADAS visualization module, used to display in real time conditions of the preceding vehicles and lane lines on a road condition where an ADAS vehicle is located, to provide a good interactional experience for a user
Preceding vehicle: vehicles in front except for the ego vehicle that need to be displayed on the instrument
Obviously, those skilled in the art can make various modifications and variations to the invention without departing from the spirit and scope of the invention. Thus, if these modifications and variations of the invention fall within the scope of the claims of the invention and their equivalent technologies, the invention is also intended to cover these modifications and variations.
Contents not described in detail in this specification belong to the related art known to those skilled in the art.

**Claims**

1.   A preceding vehicle display method for an intelligent driving assistance system, **characterized by** using the intelligent driving assistance system, comprising the following steps:

extraction of parameter: outputting, during a driving of an ego vehicle, based on an information collected in real time by a vehicle sensor and combined with an algorithm, a lateral vector distance and a longitudinal vector distance of a preceding vehicle relative to the ego vehicle, and simultaneously outputting a parameter information of left lane line and right lane line of a driving lane of the ego vehicle, the information collected in real time by the vehicle sensor comprising a position, a speed, a heading direction, and a lane line information of the preceding vehicle;
determination of a display position on a screen: calculating, based on the parameter information, respectively a lateral position of the preceding vehicle, relative position relationships between the preceding vehicle and lane lines, and longitudinal position relationships among various preceding vehicles, to respectively obtain a display of lateral position and a display of longitudinal position of the preceding vehicle on the screen, and then transmitting parameter signals on the display of lateral position and the display of longitudinal position to the screen for displaying by the screen, wherein lane widths of same-direction lanes in which the ego vehicle travels are the same by default.

2.   The preceding vehicle display method for the intelligent driving assistance system according to claim 1, wherein, a specific process of the step of the determination of the display position on the screen is as follows:

display of a lateral position of the preceding vehicle: calculating a lane to which the preceding vehicle belongs, calculating a ratio of a lateral distance parameter of the preceding vehicle to a lane width of a lane at which the ego vehicle is located, and transmitting the lane to which the preceding vehicle belongs and the ratio to the screen, to display the lateral position of the preceding vehicle;
display of a longitudinal position of the preceding vehicle: adopting a method of segmented display for longitudinal position of vehicle, to divide a longitudinal position of the screen into two areas which are a first area displaying nearby vehicles and a second area displaying distant vehicles, wherein sizes of vehicle models displayed in the areas are linearly set according to distances from the ego vehicle.

3.   The preceding vehicle display method for the intelligent driving assistance system according to claim 2, wherein, a specific process of the step of the display of the lateral position of the preceding vehicle is as follows:

lane determination: combining first, according to the parameter information, a lateral vector distance between the ego vehicle and the preceding vehicle with a lane line algorithm to determine a lane to which the preceding vehicle belongs;
calculation of a position proportion of left lane line and right lane line: calculating, after the lane to which the preceding vehicle belongs is determined, a vector distance from the preceding vehicle in each lane to a left lane line or a right lane line of a lane of the ego vehicle, and then obtaining a percentage of the vector distance occupying a lane width of the lane at which the ego vehicle is located;

display of a lateral position on a screen: transmitting a calculated signal of the percentage of the vector distance, from each preceding vehicle to the left lane line or the right lane line of the lane at which the ego vehicle is located, occupying the lane width of the lane at which the ego vehicle is located, and a signal of the lane to which the preceding vehicle belongs, to the screen, for a module for display of screen to display a lateral position of the preceding vehicle.

4. The preceding vehicle display method for the intelligent driving assistance system according to claim 3, wherein, in the lane determination, a specific process of determining the lane to which the preceding vehicle belongs is as follows:

calculation of distances from the ego vehicle to the left lane line and right lane line: respectively calculating, by substituting a longitudinal vector distance Px of the preceding vehicle into a lane line function of the left lane line and right lane line of the ego vehicle, a value of the lateral vector distance $Y_L$ from the ego vehicle to the left lane line of the ego vehicle and a value of the lateral vector distance $Y_R$ from the ego vehicle to the right lane line of the ego vehicle, wherein the lane line function is $Y = C0 + C1 * x + C2 * x^2 + C3 * x^3$;

lane judgement: comparing a lateral vector distance Py between the ego vehicle and the preceding vehicle, with $Y_L$ and $Y_R$, respectively, to judge a situation in which the preceding vehicle is located in a left, middle, or right lane:

1) when $Py > Y_L$, the preceding vehicle is located in a left lane;
2) when $Y_L \geq Py \geq Y_R$, the preceding vehicle is located in a middle lane where the ego vehicle is located;
3) when $Y_R > Py$, the preceding vehicle is located in a right lane;

in all the above three situations, the ego vehicle travels in the middle lane by default.

5. the preceding vehicle display method for the intelligent driving assistance system according to claim 4, wherein, in the step of the calculation of the position proportion of left lane line and right lane line, a calculation process of a vector distance $D_L$ from the preceding vehicle in each lane to the left lane line or the right lane line of the lane of the ego vehicle is as follows:

1) when the preceding vehicle is located in the left lane, $D_L = P_Y - Y_L$;
2) when the preceding vehicle is located in the middle lane where the ego vehicle is located, $D_L = Y_L - Py$;
3) when the preceding vehicle is located in the right lane, $D_L = Y_R - Py$.

6. The preceding vehicle display method for the intelligent driving assistance system according to claim 5, wherein, in the step of the calculation of the position proportion of left lane line and right lane line, a calculation process of a percentage $D_L\_Pct$ of the vector distance $D_L$ from the preceding vehicle to the left lane line or the right lane line of the lane of the ego vehicle occupying the lane width at which the ego vehicle is located W is as follows:

1) the lane width at which the ego vehicle is located $W = Y_L - Y_R$
2) when the preceding vehicle is located in the left lane, $D_L\_Pct = (Py - Y_L)/(Y_L - Y_R)$;
3) when the preceding vehicle is located in the middle lane where the ego vehicle is located, $D_L\_Pct = (Y_L - Py) / (Y_L - Y_R)$;
4) when the preceding vehicle is located in the right lane, $D_L\_Pct = (Y_R - Py) / (Y_L - Y_R)$.

7. The preceding vehicle display method for the intelligent driving assistance system according to claim 6, wherein, a specific process of the step of the display of the longitudinal position of the preceding vehicle is as follows:

area partitioning: dividing a longitudinal display area of an instrument into two portions which are the first area occupying X% of the longitudinal display area and the second area occupying 1-X% of the longitudinal display area;

positional relationships of various areas: displaying, in the first area, an end position of a displayed nearby vehicle Lgt_Lim, and displaying, in the second area, vehicles between the end position of the displayed nearby vehicle Lgt_Lim and a farthest position of displayed distant vehicles Lgt_Max;

preceding vehicle static model in the first area: displaying, in the first area, a model of only one preceding vehicle on each lane of the instrument, the only one preceding vehicle being a preceding vehicle closest to the ego vehicle in each lane, and having a model size $Size\_min = (1-X\%)*L$, where L is a longitudinal size of display area of the instrument, a longitudinal position of the preceding vehicle being always maintained at an X% position of the instrument;

preceding vehicle dynamic model in the first area: adjusting, when a preceding vehicle runs in the first area, a model size and a longitudinal position of the preceding vehicle according to a longitudinal position Px by a linear proportion Px_Pct, where a calculation logic of Px_Pct is as follows:

$$Px\_Pct = (Px * X\%) / Lgt\_Lim;$$

positional arrangements of various preceding vehicles: displaying, on the screen, the preceding vehicle at a longitudinal display position being a Px_Pct from bottom to top of a display area of the display of screen, a model size of the preceding vehicle being:

$$Size\_zone1 = -(Size\_base - Size\_min)/X\% * P_X\_Pct + Size\_base,$$

where, Size_base is a size of a base model, which is a model size of the preceding vehicle at

$$Px = 0.$$

8. The preceding vehicle display method for the intelligent driving assistance system according to claim 7, wherein, in a step of the extraction of parameters, a coordinate system used by an ADAS visualization module takes a ground corresponding to an intersection of a central axis of vehicle and a horizontal line of camera as an origin of a vehicle coordinate system, a forward direction as X with forward representing positive, and a lateral direction as Y with toward left representing positive.

wherein, collected positional information and lane line parameters are as follows:

Py: a vector distance in a Y direction between a center of rear axle of the ego vehicle and a center of rear axle of the preceding vehicle;

Px: a vector distance in an X direction from a center of front bumper of the ego vehicle to a center of rear bumper of the preceding vehicle;

C0_L0: a lateral vector distance from a left lane line to the center of rear axle of the ego vehicle;

C0_R0: a lateral vector distance from a right lane line to the center of rear axle of the ego vehicle;

C1_L0: an angle between a tangent at a turn of the left lane line and a straight line of straight segment of the left lane line;

C1_R0: an angle between a tangent at a turn of the right lane line and a straight line of straight segment of the right lane line;

C2_L0: a curvature at a turn of the left lane line;

C2_R0: a curvature at a turn of the right lane line;

C3_L0: a change rate of curvature at a turn of the left lane line;

C3_R0: a change rate of curvature at a turn of the right lane line.

9. A preceding vehicle display device for an intelligent driving assistance system, comprising an intelligent driving assistance system which comprises the following portions:

a perception fusion module: outputting, during a driving of an ego vehicle, based on an information collected in real time by a vehicle sensor and combined with an algorithm, a lateral vector distance and a longitudinal vector distance of a preceding vehicle relative to the ego vehicle, and simultaneously outputting a parameter information of left lane line and right lane line of a driving lane of the ego vehicle, the information collected in real time by the vehicle sensor comprising a position, a speed, a heading direction, and a lane line information of the preceding vehicle;

an ADAS visualization module: calculating, based on the parameter information, respectively a lateral position of the preceding vehicle, relative position relationships between the preceding vehicle and lane lines, and longitudinal position relationships among various preceding vehicles, to respectively obtain a display of lateral position and a display of longitudinal position of the preceding vehicle on the screen, and then transmitting parameter signals on the display of lateral position and the display of longitudinal position to the screen for displaying by the screen, wherein lane widths of same-direction lanes in which the ego vehicle travels are the same by default.

10. A computer system, **characterized by** comprising the preceding vehicle display device for the intelligent driving assistance system according to claim 9.

FIG. 1

FIG. 2

during a driving of an ego vehicle, a vehicle sensor collects in real time information such as a position, a speed, a heading direction, and lane lines of a preceding vehicle, and transmits the information to a perception fusion module of ADAS

the perception fusion module, based on these information and combined with an algorithm, outputs a lateral vector distance (Py) and a longitudinal vector distance (Px) of the preceding vehicle relative to the ego vehicle, and simultaneously outputs a parameter information of left and right lane lines of a driving lane of the ego vehicle

a coordinate system used by an ADAS visualization module takes a ground corresponding to an intersection of a central axis of vehicle and a horizontal line of camera as an origin of a vehicle coordinate system, a forward direction as X with forward representing positive, and a lateral direction as Y with toward left representing positive

based on the information provided by the perception fusion module, the ADAS visualization module performs an optimization processing respectively from aspects of a lateral position of the preceding vehicle, a relative position relationship of the preceding vehicle with the lane lines and a longitudinal position of the preceding vehicle, to respectively obtain a display of lateral position and a display of longitudinal position of the preceding vehicle in a screen

outputting parameter signals of the display of lateral position and the display of longitudinal position to the display of screen for display. Optionally, the ADAS visualization module assumes that all lanes, which are in the same direction as the ego vehicle's traveling lane, have the same lane widths, and the lane widths of lanes in which the ego vehicle travels are all W

FIG. 3

Perception fusion module

**ADAS visualization module**

Obtaining the position information (Py, Px) of vehicles in the same direction and the lane line information C0, C1, C2, C3

Comparing the lateral position of the vehicle with the lane lines to determine the lane to which a target vehicle belongs

Calculating the distance $D_L$ from the target vehicle in different lanes to the left lane line of a lane of the target vehicle

Outputting the percentage of $|D_L/W|$ and the lane information to which the target vehicle belongs

Instrument module

FIG. 4

$$Y_R = C0\_R0 + C1\_R0*Px + C2\_R0*Px^2 + C3\_R0*Px^3$$

$$Y_L = C0\_L0 + C1\_L0*Px + C2\_L0*Px^2 + C3\_L0*Px^3$$

$(Py, Px)$

Py

FIG. 5

$$Y = C0 + C1*x + C2*x^2 + C3*x^3$$

$(Py, Px)$ Py

$D_L$

FIG. 6

a longitudinal display area of instrument is divided into two portions which are first area and second area; the first area occupies X% of the longitudinal display area (calibratable, occupying most of the screen, for example 90%); the second area occupies 1-X% of the longitudinal display area, it is generally set that $50 \leq X \leq 100$

the first area is used to display an end position of displayed nearby vehicle Lgt_Lim , and the second area is used to display the end position of displayed nearby vehicle Lgt_Lim and a farthest position of displayed distant vehicle Lgt_Max

a model of only one preceding vehicle is displayed on each lane of an instrument within the first area, the only one preceding vehicle being a preceding vehicle closest to the ego vehicle in each lane; a model size of the preceding vehicle is that Size_min =(1-X%)*L, where L is a longitudinal size of display area of the instrument; a longitudinal position of the preceding vehicle is always maintained at an X% position of the instrument

when a preceding vehicle runs in the first area, a model size and a longitudinal position of the preceding vehicle are adjusted according to a longitudinal position Px by a linear proportion Px_Pct, where a calculation logic of Px_Pct is as follows: Px_Pct = (Px * X%) / Lgt_Lim

 a longitudinal display position of the preceding vehicle on the display of screen is at a Px_Pct position from bottom to top of a display area of the display of screen, a model size of the preceding vehicle being: Size_zone1=—（Size_base—Size_min）/ x%*Px_Pct+Size_base，where, Size_base is a size of a base model, which is a model size of the preceding vehicle at Px = 0

FIG. 7

FIG. 8

model size of
the target vehicle

Size_base

Size_min

$P_x$_Pct   X%   1

longitudinal proportion
of the target vehicle

FIG. 9

preceding vehicle display device for an intelligent driving assistance system

intelligent driving assistance system

| perception fusion module | ADAS visualization module |

FIG. 10

computer system

preceding vehicle display device for an
intelligent driving assistance system

FIG. 11

## INTERNATIONAL SEARCH REPORT

| International application No. |
| --- |
| **PCT/CN2023/118296** |

| A. | CLASSIFICATION OF SUBJECT MATTER |
| --- | --- |

B60K 35/00(2006.01)i;  B60W 40/04(2006.01)n

According to International Patent Classification (IPC) or to both national classification and IPC

| B. | FIELDS SEARCHED |
| --- | --- |

Minimum documentation searched (classification system followed by classification symbols)

IPC：B60K35/-

Documentation searched other than minimum documentation to the extent that such documents are included in the fields searched

Electronic data base consulted during the international search (name of data base and, where practicable, search terms used)

CNABS: CNTXT; CNKI; VEN; USTXT: 东风汽车, 丁晨, 余琛, 刘义军, 智能驾驶辅助, 自动驾驶, 前车, 自车, 横向距离, 纵向距离, 车道线, 屏幕, 仪表盘, 相对位置, 显示, intelligent driving assistance, ADAS, front vehicle, own vehicle, transverse distance, longitudinal distance, lane line, display, dashboard, relative, position, location

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116587853 A (DONGFENG MOTOR GROUP CO., LTD.) 15 August 2023 (2023-08-15) <br> claims 1-10, description, paragraphs 0039-0093, and figures 3-11 | 1-10 |
| A | CN 114655222 A (CHONGQING CHANG'AN AUTOMOBILE CO., LTD.) 24 June 2022 (2022-06-24) <br> description, paragraphs 0002-0056, and figures 1-3 | 1-10 |
| A | CN 113954634 A (WUHAN KOTEI INFORMATICS CO., LTD.) 21 January 2022 (2022-01-21) <br> entire document | 1-10 |
| A | CN 109866764 A (SUZHOU INDUSTRIAL PARK INSTITUTE OF VOCATIONAL TECHNOLOGY) 11 June 2019 (2019-06-11) <br> entire document | 1-10 |
| A | CN 111942395 A (HYUNDAI MOTOR CO., LTD.; KIA MOTORS CORP.) 17 November 2020 (2020-11-17) <br> entire document | 1-10 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 November 2023** | **07 December 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/118296** |

| C. | DOCUMENTS CONSIDERED TO BE RELEVANT | |
|---|---|---|
| Category* | Citation of document, with indication, where appropriate, of the relevant passages | Relevant to claim No. |
| A | CN 112824186 A (HYUNDAI MOTOR CO., LTD.; KIA MOTORS CORP.) 21 May 2021 (2021-05-21)<br>entire document | 1-10 |
| A | JP H11264868 A (HITACHI LTD.) 28 September 1999 (1999-09-28)<br>entire document | 1-10 |

Form PCT/ISA/210 (second sheet) (July 2022)

**INTERNATIONAL SEARCH REPORT**
**Information on patent family members**

International application No.

**PCT/CN2023/118296**

| Patent document cited in search report | | | Publication date (day/month/year) | Patent family member(s) | | | Publication date (day/month/year) |
|---|---|---|---|---|---|---|---|
| CN | 116587853 | A | 15 August 2023 | None | | | |
| CN | 114655222 | A | 24 June 2022 | None | | | |
| CN | 113954634 | A | 21 January 2022 | None | | | |
| CN | 109866764 | A | 11 June 2019 | None | | | |
| CN | 111942395 | A | 17 November 2020 | DE | 102019217739 | A1 | 19 November 2020 |
| | | | | KR | 20200131640 | A | 24 November 2020 |
| | | | | US | 2020361453 | A1 | 19 November 2020 |
| | | | | US | 11318933 | B2 | 03 May 2022 |
| CN | 112824186 | A | 21 May 2021 | US | 2021148724 | A1 | 20 May 2021 |
| | | | | US | 11555712 | B2 | 17 January 2023 |
| | | | | DE | 102020113818 | A1 | 20 May 2021 |
| | | | | KR | 20210062144 | A | 31 May 2021 |
| JP | H11264868 | A | 28 September 1999 | None | | | |

Form PCT/ISA/210 (patent family annex) (July 2022)